# EUROPÄISCHE PATENTANMELDUNG

(11) **EP 4 324 787 A1**
(43) Veröffentlichungstag der Anmeldung: **21.02.2024**
(21) Anmeldenummer: 22020395.4
(22) Anmeldetag: 17.08.2022
(51) Int. Cl.: C01B 3/50, C01B 3/56, C01B 3/48

(54) **VERFAHREN UND ANLAGE ZUR GEWINNUNG EINES ODER MEHRERER VERFAHRENS PRODUKTE**

(71) Anmelder: Linde GmbH, 82049 Pullach (DE)
(72) Erfinder: Hang, Florian, 82049 Pullach (DE); Ott, Wolfgang, 82049 Pullach (DE); Jarosch, Maximilian, 82049 Pullach (DE)
(74) Vertreter: Fischer, Werner

(57) **Zusammenfassung**

Ein Verfahren zur Gewinnung eines oder mehrerer Verfahrensprodukte (108) wird vorgeschlagen, bei dem ein Einsatzgemisch unter Erhalt eines zumindest Kohlenmonoxid, Wasserstoff und Wasser enthaltenden Synthesegases (101) einer endothermen Umsetzungsreaktion (1) unterworfen wird, wobei zumindest ein Teil des Wasser enthaltenden Synthesegases unter Erhalt eines ersten Zweiphasenstroms (102) einer Abkühlung (2) auf eine Temperatur in einem ersten Temperaturbereich unterworfen wird, zumindest ein Teil des ersten Zweiphasenstroms (102) in einem ersten Prozesskondensatabscheider (3) unter Erhalt einer ersten Gasphase (104) und einer ersten Flüssigphase (103) phasengetrennt wird, zumindest ein Teil der ersten Gasphase (104) unter Erhalt eines zweiten Zweiphasenstroms (105) einer weiteren Abkühlung (4, 5) auf eine Temperatur in einem zweiten Temperaturbereich unterworfen wird, zumindest ein Teil des zweiten Zweiphasenstroms (105) in einem zweiten Prozesskondensatabscheider (6) unter Erhalt einer zweiten Gasphase (107) und einer zweiten Flüssigphase (106) phasengetrennt wird, und zumindest ein Teil der zweiten Gasphase (107) unter Erhalt des oder der Verfahrensprodukte (108) und eines Restgases (109) auf einer Temperatur in dem zweiten Temperaturbereich einer Synthesegasaufbereitung (7) unterworfen wird. Hierbei ist vorgesehen, dass eine Wärmeübertragung von dem Synthesegases (101) oder einem Teil hiervon und/oder von dem ersten Zweiphasenstrom (102) oder einem Teil hiervon stromauf der weiteren Abkühlung (4, 5) auf das Restgas (109) oder einen Teil hiervon und/oder auf wenigstens einen weiteren Prozessgasstrom vorgenommen wird. Eine entsprechende Anlage (100, 200, 300, 400) ist ebenfalls Gegenstand der Erfindung.

## Beschreibung

Die Erfindung betrifft ein Verfahren und eine Anlage zur Gewinnung eines oder mehrerer Verfahrensprodukte, insbesondere unter Einsatz einer Dampfreformierung.

### Hintergrund der Erfindung

Die Erzeugung von Wasserstoff und/oder Synthesegas mit Hilfe des Verfahrens der Dampfreformierung ist ein ausgereifter und erprobter Industrieprozess.

Charakteristisch für dieses Verfahren ist die katalytische Umsetzung eines kohlenwasserstoffhaltigen Einsatzstoffs, typischerweise Erdgas, Naphtha, Raffinerie-Restgas oder dergleichen, mit Hilfe von Wasserdampf zu Synthesegas.

Unter den Begriff "Synthesegas" soll dabei hier bereits die aus einem Dampfreformierungsreaktor ausströmende Mischung aus Wasserstoff, Kohlenmonoxid, Kohlendioxid, Methan (oder anderen, nicht umgesetzten Kohlenwasserstoffen) und überschüssigem Wasserdampf fallen. Ein entsprechendes Synthesegas wird anderenorts auch mit dem Begriff "Syntheserohgas" bezeichnet. Ein hier mit dem Begriff "Synthesegas" bezeichnetes Gasgemisch liegt dabei auch noch nach teilweiser oder vollständiger Abtrennung von Wasser oder nach teilweiser oder vollständiger Weiterverarbeitung durch eine Kohlendioxid- bzw. Wassergas-Shiftreaktion, bei der Kohlenmonoxid mit Wasserdampf zu Wasserstoff und Kohlendioxid reagiert, vor, auch wenn hier eine Änderung der Zusammensetzung gegenüber der aus dem Dampfreformierungsreaktor ausströmenden Mischung erfolgt ist und ggf. neben Wasser auch gelöstes Kohlendioxid und Kohlenwasserstoffe in Kondensaten abgeschieden bzw. durch die Shiftreaktion umgewandelt wurden.

Da im Rahmen der vorliegenden Erfindung anstelle einer Dampfreformierung auch andere Verfahren zur Herstellung von Synthesegasen eingesetzt werden können, wie beispielsweise eine partielle Oxidation, eine Methanolspaltung oder andere Herstellungsverfahren von Synthesegas, wird hier unter dem Begriff "Synthesegas" allgemein ein (zumindest) Kohlenmonoxid und Wasserstoff enthaltendes Gasgemisch verstanden werden, ungeachtet des jeweiligen Herstellungswegs. Dieses Synthesegas wird als "wasserhaltig" bezeichnet, wenn es mehr als nur Spuren von Wasser bzw. Resten von Einsatzdampf aufweist.

Nachfolgend wird die vorliegende Erfindung überwiegend unter Bezugnahme auf die Dampfreformierung beschrieben, auch wenn hiermit keine Beschränkung des Schutzbereichs der vorliegenden Erfindung verbunden ist.

Die Dampfreformierung ist ein endothermes Verfahren, d.h. dem Gemisch aus Einsatzstoff und Wasserdampf muss thermische Energie zugeführt werden. Dies erfolgt durch die Verbrennung von Brenngasen im Reformerofen. Entsprechendes gilt auch für andere Herstellungsverfahren von Synthesegas.

Der Prozess des Reformierens mit Wasserdampf ist namensgebend für den Anlagentyp des Dampfreformers. Je nach spezifischer Anwendung verfügt eine Anlage gemäß diesem Verfahren über weitere verfahrenstechnische Schritte, um das gewünschte Produkt zu gewinnen, wie bspw. einen Shiftreaktor und eine Druckwechseladsorptionsanlage zur Gewinnung von reinem Wasserstoff.

Der Verfahrensschritt der Dampfreformierung wird dabei mit einer Dampfmenge betrieben, welche höher ist als die stöchiometrisch benötigte Dampfmenge. Diese Dampfmenge variiert dabei von Anlagentyp zu Anlagentyp, abhängig vom verwendeten Einsatzstoff, den nachfolgenden Verfahrensschritten zur Weiterverarbeitung des Synthesegases, und dem gewünschten Endprodukt. Entsprechendes kann auch für andere Verfahren zur Herstellung von Synthesegas gelten, so dass auch dort erhaltene Synthesegase einen bestimmten Wassergehalt aufweisen.

Damit ein solches Synthesegas weiterverarbeitet werden kann, muss der nicht umgesetzte Wasserdampf bzw. aus anderen Quellen stammendes Wasser aus dem Synthesegas abgetrennt werden. Um dies zu erreichen, wird das Synthesegas abgekühlt, bis der überschüssige Wasserdampf auskondensiert und im flüssigen Aggregatzustand aus dem Synthesegas abgeschieden werden kann.

Diese Abkühlung erfolgt in der Regel in mehreren Verfahrensschritten, und die hierbei dem Synthesegas entzogene Wärme wird über Wärmeübertrager in den Gesamtprozess zurückgeführt, wie beispielsweise über einen Anwärmer für den Einsatzstoff, Kesselspeisewasser und/oder entmineralisiertes Wasser. Nach diesen Verfahrensschritten ist die Temperatur des Synthesegases jedoch typischerweise noch immer zu hoch für die Weiterverarbeitung. Es muss daher weiter abgekühlt werden, wobei weiteres anfallendes Kondensat ebenfalls abgetrennt wird.

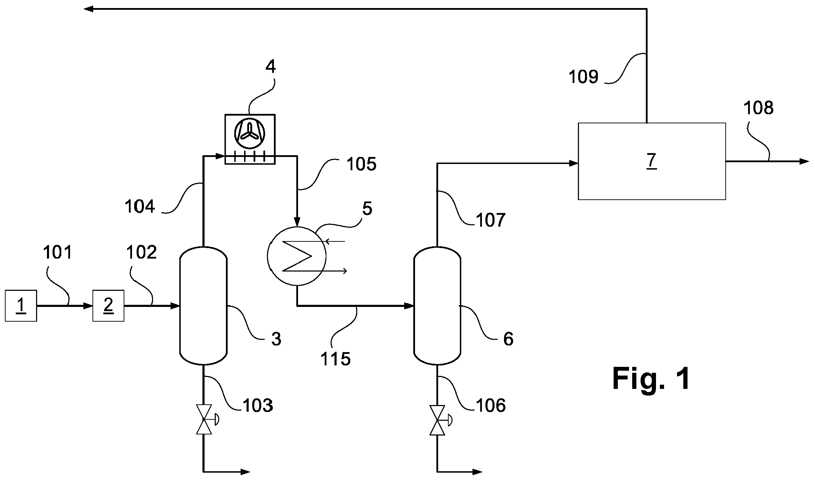

Ein hierfür einsetzbarer Ansatz gemäß einer nicht erfindungsgemäßen Ausgestaltung ist in Abbildung 1 am Beispiel einer Dampfreformierung dargestellt und wird weiter unten unter Bezugnahme auf Figur 1 noch detailliert erläutert.

Wie unten erläutert, wird in einer Synthesegasaufbereitung typischerweise ein sogenanntes Restgas gebildet, das aufgrund enthaltener Brenngase wie Methan, Wasserstoff und Kohlenmonoxid einen hohen Energieinhalt (Heizwert) besitzt, der vorteilhafterweise genutzt werden sollte, und deshalb den Brennern in einem beheizten Reaktor, beispielsweise einem Reformerofen in der Dampfreformierung, zur Unterfeuerung zugeführt wird. Anders als die für die Verbrennung benötigte Verbrennungsluft wird das Restgas typischerweise nicht vorgewärmt, bevor es den Brennern zugeführt wird.

Der unter Bezugnahme auf Figur 1 beschriebe Prozess des Dampfreformierens, und im Speziellen der Teil der Synthesegaskühlung, weist drei Hauptverluste auf. Entsprechendes gilt im Wesentlich auch für andere Reformierungsverfahren.

Zum einen ist die thermische Energie zu nennen, welche im Rauchgas enthalten ist, das zur Atmosphäre abgelassen wird. Diese thermische Energie, welche das Rauchgas mit typischerweise 130 bis 150 °C besitzt, wird nicht zurückgewonnen. Als Hauptgrund hierfür ist zum einen das niedrige Temperaturniveau des Rauchgasstromes und zum anderen das Anfallen von säurehaltigen Kondensaten aus dem Rauchgas zu nennen, was im Falle einer Nutzung dieser Restwärme einen massiven apparate- und materialtechnischen Mehraufwand bedeuten würde.

Zum anderen sind die in Figur 1 beschriebenen Wärmeströme der Synthesegasströme zu erwähnen, die dem Synthesegas im Luftkühler und im Wasserkühler entzogen werden. Beide Wärmeströme landen direkt (an die Umgebungsluft im Luftkühler übertragen) bzw. indirekt (über das Kühlwasser und den Kühlturm an die Umgebungsluft übertragen) ungenutzt in der Atmosphäre.

All diese Verluste gehen zu Lasten der thermischen Effizienz der Anlage und müssen durch einen erhöhten Verbrauch von Brenngasen kompensiert werden, welcher wiederum einen erhöhten Kohlendioxidausstoß an die Umgebung mit sich bringt.

Durch die hier beschriebene Erfindung sollen die in der Synthesegaskühlung anfallenden Verluste reduziert und somit der Brennstoffbedarf und gleichermaßen der Kohlendioxidausstoß bzw. -fußabdruck einer entsprechenden Anlage und deren Produkten reduziert werden.

### Offenbarung der Erfindung

Vor diesem Hintergrund schlägt die vorliegende Erfindung ein Verfahren und eine Anlage zur Gewinnung eines oder mehrerer Verfahrensprodukte, insbesondere unter Einsatz einer Dampfreformierung, mit den Merkmalen der unabhängigen Patentansprüche vor. Ausgestaltungen sind Gegenstand der abhängigen Patentansprüche sowie der nachfolgenden Beschreibung.

Die vorliegende Erfindung entfaltet ihre Vorteile insbesondere durch die möglichen Einsparungen hinsichtlich des Brennstoffbedarfs sowie des Kohlendioxidausstoßes beim Betrieb eines Dampfreformers zur Herstellung von Wasserstoff bzw. Synthesegas bzw. eines anderen Verfahrens zur Herstellung von Wasserstoff bzw. Synthesegas. Diese Einsparungen werden durch die Reduzierung von thermischen Verlusten in der Abkühlkette des Synthesegases erzielt.

Hierbei wird ein Verfahren zur Gewinnung eines oder mehrerer Verfahrensprodukte, insbesondere unter Einsatz einer Dampfreformierung, vorgeschlagen, bei dem ein insbesondere kohlenwasserstoff- und dampfhaltiges Einsatzgemisch unter Erhalt eines zumindest Kohlenmonoxid, Wasser und Wasserstoff sowie ggf. einen oder mehrere Kohlenwasserstoffe wie Methan enthaltenden Synthesegases einer endothermen Umsetzungsreaktion, beispielsweise einer Dampfreformierung, unterworfen wird.

Zumindest ein Teil des Wasser enthaltenden Synthesegases wird dabei unter Erhalt eines ersten Zweiphasenstroms einer Abkühlung auf eine Temperatur in einem ersten Temperaturbereich von beispielsweise 120 bis 160 °C unterworfen. Zumindest ein Teil des ersten Zweiphasenstroms wird in einem ersten Prozesskondensatabscheider unter Erhalt einer ersten Gasphase und einer ersten Flüssigphase phasengetrennt. Zumindest ein Teil der ersten Gasphase wird unter Erhalt eines zweiten Zweiphasenstroms einer weiteren Abkühlung auf eine Temperatur in einem zweiten Temperaturbereich von beispielsweise 10 bis 60 °C unterworfen, zumindest ein Teil des zweiten Zweiphasenstroms wird in einem zweiten Prozesskondensatabscheider unter Erhalt einer zweiten Gasphase und einer zweiten Flüssigphase phasengetrennt, und zumindest ein Teil der zweiten Gasphase wird unter Erhalt des oder der Verfahrensprodukte und eines ein oder mehrere Brenngase wie Methan und/oder Wasserstoff und/oder Kohlenmonoxid erhaltenden Restgases auf einer Temperatur in dem zweiten Temperaturbereich einer Synthesegasaufbereitung unterworfen.

Das Restgas kann einen Teil des in dem Synthesegas enthaltenen Wasserstoffs und insbesondere einen oder mehrere Kohlenwasserstoffe wie Methan sowie Kohlenmonoxid als Brenngase enthalten. Es kann beispielsweise mittels einer Druckwechseladsorption oder eines anderen Trennschritts gewonnen werden. Im Rahmen der vorliegenden Erfindung wird das Restgas oder ein Teil hiervon, insbesondere zur Gewinnung von Wärme für die Umsetzungsreaktion mit einem sauerstoffhaltigen Gas oder Gasgemisch verfeuert. Bei dem sauerstoffhaltigen Gas oder Gasgemisch kann es sich insbesondere um Verbrennungsluft, sauerstoffangereicherte Luft oder reinen bzw. im Wesentlichen reinen (bspw. "technischen") Sauerstoff handeln.

Im Rahmen der vorliegenden Erfindung ist vorgesehen, dass eine Wärmeübertragung von dem Synthesegas oder einem Teil hiervon und/oder von dem ersten Zweiphasenstrom oder einem Teil hiervon, d.h. auch beispielsweise in dem ersten Prozessgasabscheider, stromauf der weiteren Abkühlung auf einen weiteren Prozessstrom, beispielsweise das Restgas oder dem zur Gewinnung der Wärme für die Umsetzungsreaktion verfeuerten Teil hiervon und/oder das sauerstoffhaltige Gas oder Gasgemisch (bzw. jeweils wiederum Teile entsprechender Gase oder Gasgemische) vorgenommen wird.

Gemäß einer Ausgestaltung der vorliegenden Erfindung ist vorgesehen, dass die Wärmeübertragung unter Verwendung eines Wärmeüberträgermediums durchgeführt wird, wobei weitere Ausgestaltungen nachfolgend erläutert werden.

Das Wärmeüberträgermedium oder ein Teil hiervon kann in einer Ausgestaltung der vorliegenden Erfindung in einem Wärmeüberträgerkreislauf nacheinander in einer oder mehreren ersten Wärmeübertragerstrukturen erwärmt, in einer oder mehreren, in einem Restgasstrom oder Restgasteilstrom des Restgases und/oder des wenigstens einen weiteren Prozessgasstroms angeordneten zweiten Wärmeübertragerstrukturen abgekühlt, und mittels einer Pumpenanordnung der ersten Wärmeübertragerstruktur erneut zugeführt werden, wodurch der Kreislauf geschlossen wird.

In einer Ausgestaltung der Erfindung kann die erste Wärmeübertragerstruktur stromauf des ersten Prozesskondensatabscheiders und/oder in dem ersten Prozesskondensatabscheiders angeordnet sein. In einer alternativen Ausgestaltung kann zumindest eine der mehreren ersten Wärmeübertragerstrukturen stromauf des ersten Prozesskondensatabscheiders angeordnet sein und zumindest eine weitere der mehreren ersten Wärmeübertragerstrukturen kann in dem ersten Prozesskondensatabscheider angeordnet sein. Die Wärmeübertragerstrukturen können Teile von Wärmetauschern, Heizschlangen oder dergleichen sein oder vollständig ausgebildete Wärmetauscher darstellen.

Insbesondere kann in den soeben erläuterten Ausgestaltungen das Wärmeüberträgermedium in dem gesamten Wärmeüberträgerkreislauf auf einem überkritischen Druck- und Temperaturniveau geführt werden. Es kann aber auch vorgesehen sein, das Wärmeüberträgermedium in dem gesamten Wärmeüberträgerkreislauf ohne Phasenänderung auf einem unterkritischen Druck- und Temperaturniveau zu führen, wie beispielsweise bei Kesselspeisewasser der Fall. Es ist ferner auch möglich, dass das Wärmeüberträgermedium in einem Abschnitt des Wärmeüberträgerkreislaufs in kondensiertem Zustand und in einem weiteren Abschnitt des Wärmeüberträgerkreislaufs in verdampftem Zustand geführt wird, d.h. nach Art einer an sich bekannten Wärmepumpe.

In Ausgestaltungen der vorliegenden Erfindung kann in den Wärmeüberträgerkreislauf eine Turbinen-Generator-Anordnung eingebunden sein, so dass bei der Entspannung des Wärmeüberträgermediums freiwerdende mechanische Energie in elektrische Energie umgewandelt wird und nicht verlorengeht.

Das Wärmeübertragungsmedium kann in Ausgestaltungen der vorliegenden Erfindung aus Methanol, einem Thermoöl und einem Kohlenwasserstoff ausgewählt sein.

Alternativ zur Verwendung eines dezidierten Wärmeübertragungsmediums kann die Wärmeübertragung in Ausgestaltungen der vorliegenden Erfindung auch unter Verwendung von Kesselspeisewasser durchgeführt werden, das gegen zumindest einen Teil des Synthesegases in einer oder mehreren ersten Wärmeübertragerstrukturen erwärmt, danach in einer oder mehreren, in einem Restgasstrom oder Restgasteilstrom des Restgases und/oder des wenigstens einen weiteren Prozessgasstroms angeordneten zweiten Wärmeübertragerstrukturen abgekühlt, und schließlich gegen zumindest einen Teil des Synthesegases in einer oder mehreren ersten dritten Wärmeübertragerstrukturen, die insbesondere stromauf der einen oder mehreren ersten Wärmeübertragerstrukturen wieder erwärmt wird. Auch hier gilt bezüglich der Wärmeübertragerstrukturen das oben Gesagte.

Die Synthesegasaufbereitung kann Verfahrensschritte umfassen, die aus einer Kondensation von Kohlenwasserstoffen, einer Wassergasshift, einer reversen Wassergasshift, einem Druckwechseladsorptionsschritt und einem oder mehreren kryogenen Trennschritten oder Kombinationen hiervon ausgewählt sind.

Das Restgas kann in Ausgestaltungen der Erfindung, wie beispielsweise für ein Restgas einer Druckwechseladsorption üblich, 15 bis 20% oder mehr Methan und Wasserstoff aufweisen. Ein Produktgas der Druckwechseladsorption kann beispielsweise im Wesentlichen reiner Wasserstoff sein.

In einer Ausgestaltung der Erfindung kann vorgesehen sein, dass das Restgas zusätzlich unter Verwendung von Prozessdampf erwärmt wird.

Eine Anlage zur Gewinnung eines oder mehrerer Verfahrensprodukte unter Einsatz einer Dampfreformierung, ist ebenfalls Gegenstand der Erfindung, wobei die Anlage dafür eingerichtet ist, ein Einsatzgemisch unter Erhalt eines zumindest Kohlenmonoxid, Wasserstoff und Wasser enthaltenden Synthesegases einer endothermen Umsetzungsreaktion zu unterwerfen, sowie zumindest einen Teil des Wasser enthaltenden Synthesegases unter Erhalt eines ersten Zweiphasenstroms einer Abkühlung auf eine Temperatur in einem ersten Temperaturbereich zu unterwerfen, zumindest einen Teil des ersten Zweiphasenstroms in einem ersten Prozesskondensatabscheider unter Erhalt einer ersten Gasphase und einer ersten Flüssigphase phasenzutrennen, zumindest einen Teil der ersten Gasphase unter Erhalt eines zweiten Zweiphasenstroms einer weiteren Abkühlung auf eine Temperatur in einem zweiten Temperaturbereich zu unterwerfen, zumindest ein Teil des zweiten Zweiphasenstroms in einem zweiten Prozesskondensatabscheider unter Erhalt einer zweiten Gasphase und einer zweiten Flüssigphase phasenzutrennen, und zumindest einen Teil der zweiten Gasphase unter Erhalt des oder der Verfahrensprodukte (108) und eines Restgases auf einer Temperatur in dem zweiten Temperaturbereich einer Synthesegasaufbereitung zu unterwerfen.

Die Anlage zeichnet sich durch Mittel aus, die dafür eingerichtet sind, eine Wärmeübertragung von dem Synthesegas oder einem Teil hiervon und/oder von dem ersten Zweiphasenstrom oder einem Teil hiervon stromauf der weiteren Abkühlung auf das Restgas oder einen Teil hiervon und/oder auf wenigstens einen weiteren Prozessgasstrom vorzunehmen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 eine nicht erfindungsgemäße Anordnung veranschaulicht,
Figur 2 eine Anlage gemäß einer Ausgestaltung der Erfindung veranschaulicht,
Figur 3 eine Anlage gemäß einer Ausgestaltung der Erfindung veranschaulicht,
Figur 4 eine Anlage gemäß einer Ausgestaltung der Erfindung veranschaulicht, und
Figur 5 eine Anlage gemäß einer Ausgestaltung der Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Erneut wird nachfolgend auf eine Dampfreformierung zur Herstellung von Synthesegas Bezug genommen, jedoch ohne hier eine Einschränkung andeuten zu wollen.

In Figur 1 ist, wie eingangs erwähnt, der für die Abtrennung von Wasser aus einem mittels Dampfreformierung bereitgestellten Synthesegas übliche Ansatz gemäß einer nicht erfindungsgemäßen Ausführungsform dargestellt.

Das Synthesegas 101 wird unter Verwendung einer Umsetzungsreaktion 1, beispielsweise Dampfreformierung oder eines weiteren Reformierungsverfahrens, bereitgestellt nach einer, hier allgemein mit 2 veranschaulichten Abkühlung mit einer Temperatur von typischerweise ca. 150 bis 200 °C einem ersten Prozesskondensatabscheider 3 zugeführt. Das Synthesegas liegt nach dem einem oder mehreren ersten Abkühlschritten 2 bereits zweiphasig, d.h. in Form eines ersten Zweiphasenstroms 102, vor, wobei die flüssige Phase, das Prozesskondensat, aus Wasser mit gelösten Gasen, hauptsächlich Kohlendioxid, besteht. Das Prozesskondensat wird in dem ersten Prozesskondensatabscheider 3 als ein erster Kondensatstrom bzw. eine erste Flüssigphase 103 abgeschieden und in der Regel mit Hilfe von weiteren Verfahrensschritten in die Prozessdampferzeugung zurückgeführt.

Gesättigtes Synthesegas bzw. eine erste Gasphase 104 aus dem ersten Prozesskondensatabscheider 3 wird durch einen Luftkühler 4 geführt und dort gegen Umgebungsluft auf typischerweise ca. 60 °C abgekühlt, wobei weiteres Prozesskondensat anfällt. Einem auf diese Weise erhaltenen, nun mit 105 bezeichneten zweiten Zweiphasenstrom wird in einem Wasserkühler 5 weitere Wärme entzogen, wodurch erneut Prozesskondensat anfällt und sich der zweite Zweiphasenstrom auf typischerweise 25 bis 40 °C abkühlt. Die soeben erläuterte Abkühlung mit dem Luftkühler 4 und dem Wasserkühler 5 wird hier auch als weitere Abkühlung bezeichnet. Der zur besseren Unterscheidung in Figur 1 mit 115 bezeichnete zweite Zweiphasenstrom 105 wird anschließend in einen zweiten Prozesskondensatabscheider 6 eingespeist. Das dort abgeschiedene Prozesskondensat wird in Form eines Stoffstroms bzw. einer zweiten Flüssigphase 106 abgeschieden und in der Regel mit Hilfe von zwischengeschalteten Verfahrensschritten ebenfalls beispielsweise in die Prozessdampferzeugung zurückgeführt.

Gesättigtes Synthesegas bzw. eine zweite Gasphase 107 wird in unterschiedlichen und von den Prozessparametern wie Einsatzgas, Art des gewünschten Produktes, Produktqualität, etc. abhängenden weiteren Verfahrensschritten, die hier summarisch mit 7 angegeben sind, weiterverarbeitet, um ein Verfahrensprodukt 108 zu erhalten. Hierbei entsteht ein sogenanntes Restgas 109, das typischerweise bei geringem Druck und einer Temperatur nahe der Temperatur der zweiten Gasphase 107 vorliegt.

Das Restgas 109 besitzt, wie bereits erwähnt, aufgrund enthaltener Brenngase einen hohen Energieinhalt (Heizwert), der vorteilhafterweise genutzt werden sollte und deshalb den Brennern im Reformerofen als Brenngas zur Unterfeuerung zugeführt wird. Anders als die für die Verbrennung benötigte Verbrennungsluft wird das Restgas nicht vorgewärmt, bevor es den Brennern zugeführt wird.

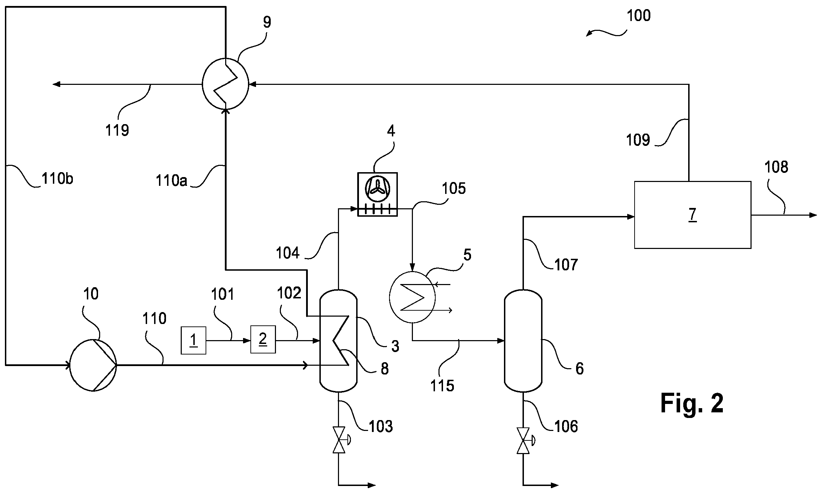

Figur 2 veranschaulicht eine gemäß einer Ausgestaltung der vorliegenden Erfindung vorgesehene Modifikation der Verfahrensschritte, die in Figur 1 veranschaulicht sind. Die bereits zuvor erläuterten Komponenten werden nicht nochmals erläutert. Eine Anlage gemäß einer Ausgestaltung der Erfindung insgesamt, deren Komponenten jedoch nicht vollständig sind, ist insgesamt mit 100 bezeichnet

Die Modifikationen gemäß der hier veranschaulichten Ausgestaltung der vorliegenden Erfindung umfassen insbesondere die Bereitstellung einer ersten Wärmeübertragungsstruktur 8 in dem ersten Prozessgasabscheider 10, einer zweiten Wärmeübertragungsstruktur 9 in einem durch Restgasstrom des Restgases 109, und eine Pumpe 10, die ein Wärmeträgermedium 110 im Kreislauf führt. Dieses Wärmeträgermedium 110 wird in der ersten Wärmeübertragungsstruktur gegen den Zweiphasenstrom 102 erwärmt und danach in der zweiten Wärmeübertragungsstruktur 9 abgekühlt. Ein Vorlaufstrom bezüglich der Wärmeübertragungsstruktur 9 ist jeweils mit 109a, ein Rücklauf mit 109b bezeichnet. Das entsprechend angewärmte Restgas 109 kann wie zuvor beschrieben zur Unterfeuerung verwendet werden, wodurch sich der zusätzlich zum Restgas benötigte Stützgasstrom, bspw. Erdgas, entsprechend reduziert.

Mittels einer ebenfalls zusätzlich bereitgestellten Pumpe 10 wird das Wärmeträgermedium 110 durch in dem ersten Prozessgasabscheider 3 angeordnete Wärmeübertragungsstruktur 8, beispielsweise eine Kühlschlange, geführt, und dort gegen das dort vorliegende Prozessgas erwärmt.

Durch die in der Anlage 100 vorgesehene Wärmerückgewinnung wird ZusatzBrennstoff für den Reformerofen eingespart, womit auch eine Absenkung des Kohlendioxidausstoßes einhergeht. Die vom Wärmträgermedium 110 aufgenommene thermische Energie senkt die in der Kühlkette anfallenden Verluste entsprechend ab und reduziert somit die Nennleistung des Luftkühlers 4 sowie des Wasserkühlers 5. Folglich können diese Geräte auch kleiner gebaut werden.

Der der Wärmeübertragung mittels der ersten und zweiten Wärmeübertragerstruktur 8, 9 und der Pumpe 10 beeinflusst den nachfolgenden Prozess kaum. Dieser kann daher wie zuvor dargestellt erfolgen, wobei gemäß der hier veranschaulichten Ausgestaltung der Erfindung im zweiten Prozesskondensatabscheider 6 eine geringere Menge an Prozesskondensat bzw. zweiter Flüssigphase 106 anfällt und das Restgas 109 zur Unterfeuerung wie oben beschrieben vorgewärmt wird. Das erwärmte Restgas ist mit 119 dargestellt.

Beispielhaft sind in den nachfolgenden Tabellen 1a und 1b Prozessdaten für eine typische Dampfreformeranlage zur Produktion von 50.000 Normkubikmetern pro Stunde Wasserstoff angegeben. Als Einsatzstoff sowie als Zusatzbrennstoff wird methanreiches Erdgas verwendet. Hierbei sind Kenngrößen gemäß dem Stand der Technik und der in Figur 2 dargestellten Ausgestaltung der Erfindung einander gegenübergestellt. Zu den jeweiligen Stoffströmen in den Ausgestaltungen der Erfindung sei auch auf die nachfolgenden Figuren verwiesen.

**Tabelle 1a**

| | **Strom** | **102** | **104** | **103** | **105** | **115** |
|---|---|---|---|---|---|---|
| Stand der Technik | Temperatur [°C] | 143 | 143 | 143 | 60 | 38 |
| | Massenstrom [kg/h] | 59458 | 46334 | 13124 | 46334 | 46334 |
| | Anteil Gasphase [Gewichts-%] | 0,846 | 1,000 | 0,000 | 0,866 | 0,862 |
| Erfindung | Temperatur [°C] | 143,2 | 138,6 | 138,6 | 60,0 | 38,0 |
| | Massenstrom [kg/h] | 59509 | 13 | 4 | 45106 | 45106 |
| | Anteil Gasphase [Gewichts-%] | 84,7 | 100 | 0 | 88,1 | 87,7 |

**Tabelle 1b**

| | **Strompunkt** | **107** | **106** | **109** | **119** | **109a** | **109b** |
|---|---|---|---|---|---|---|---|
| Stand der Technik | Temperatur [°C] | 38 | 38 | 24 | - | - | - |
| | Massenstrom [kg/h] | 36375 | 9959 | 31811 | - | - | - |
| | Anteil Gasphase [Gewichts-%] | 1,000 | 0,000 | 1,000 | - | - | - |
| Erfindung | Temperatur [°C] | 38,0 | 38,0 | 24,0 | 113,6 | 128,6 | 46,9 |
| | Massenstrom [kg/h] | 36389 | 2 | 9 | 9 | 11000 | 11000 |
| | Anteil Gasphase [Gewichts-%] | 100 | 0 | 100 | 100 | 0 | 0 |

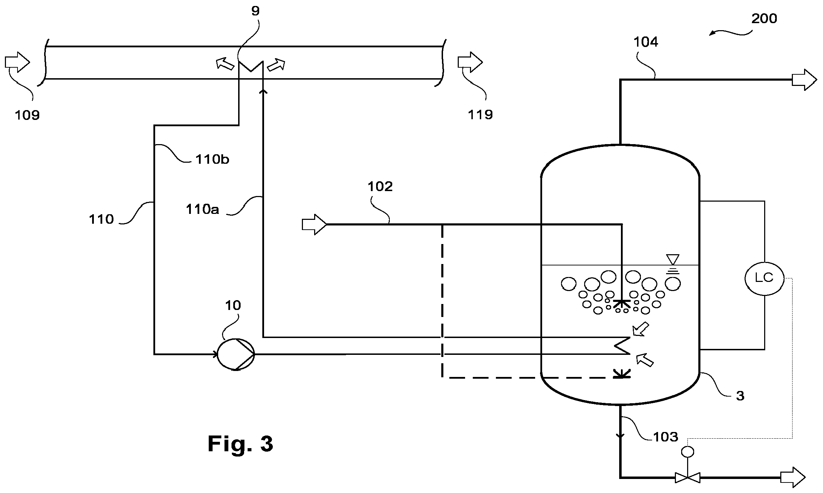

Figur 3 veranschaulicht eine Teilansicht einer Anlage 200 gemäß einer weiteren Ausgestaltung der Erfindung, die in ihren übrigen Teilen der Anlage 100 gemäß Figur 2 entsprechen kann, wobei zusätzlich veranschaulicht ist, wie die erste Wärmeübertragungsstruktur 8 in dem ersten Prozessgaskondensatabscheider 3 unterhalb des sich dort auf Grundlage eines mittels eines Füllstandsreglers LC geregelten Ablaufs ausbildenden Flüssigkeitsspiegels angeordnet ist.

Das in den ersten Prozessgaskondensatabscheider 3 eintretende erste Zweiphasengemisch 102 wird durch eine Abtauchung oder alternativ (gestrichelt veranschaulicht) durch eine im Sumpf befindliche Einspeisung mit dem sich im ersten Prozessgaskondensatabscheider 3 befindlichen Prozesskondensat durchmischt. Im Prozesskondensat befindet sich wiederum die erste Wärmeübertragungsstruktur 8, mit deren Hilfe die Wärme an das Wärmeträgermedium 110 übertragen wird. Aufgrund der Durchmischung von zuströmendem Synthesegas und Prozesskondensat im Abscheider wird ein guter Wärmeübergang vom Prozesskondensat an den Wärmeübertrager und dadurch auch ein guter Wärmeübergang vom Synthesegas an das Prozesskondensat ermöglicht.

Das Restgas 109 strömt durch ein nicht gesondert bezeichnetes Rohr, in dem die zweite Wärmeüberträgerstruktur 9 angeordnet ist. Wärmeübergänge sind jeweils in Form nicht ausgefüllter Pfeile in unmittelbarer Nähe der Wärmeüberträgerstrukturen 8 bzw. 9 veranschaulicht.

Durch den Einsatz der in dieser Erfindung beschriebenen Technologie kann der Zusatz-Brennstoffbedarf beim Betrieb eines Dampfreformers abgesenkt werden. Dadurch lassen sich Ressourcen sparen und die Umwelt wird durch einen geringeren Kohlendioxidausstoß weniger stark belastet.

Die nachfolgenden Tabellen 2a und 2b geben das Einsparpotenzial bei Verwendung eines Verfahrens gemäß einer Ausgestaltung der Erfindung beispielhaft für eine Dampfreformeranlage zur Produktion von 50.000 Normkubikmetern pro Stunde Wasserstoff gegenüber dem Stand der Technik und die jeweiligen Deltas an.

**Tabelle 2a**

| | | **Luftkühler** | **Wasserkühler** | **Wärmeträgermedium** |
|---|---|---|---|---|
| Stand d. Technik | Wärmestrom [kW] | 9164 | 1114 | - |
| Erfindung | Wärmestrom [kW] | 8172 | 1083 | 1050 |

**Tabelle 2b**

| | **Zusatz-Brennstoffmenge [Nm³/h]** | **CO₂-Emission [kg/h]** |
|---|---|---|
| Stand der Technik | 2085 | 43323 |
| Erfindung | 1889 | 42968 |
| Delta absolut | -196 | -355 |
| Delta relativ | -9,4% | -0,8% |

Die Erfindung beschränkt sich nicht auf eine Anwendung, wie sie zuvor beschrieben ist. Die Erzeugung von Wasserstoff und/oder Synthesegas in beliebigen Verhältnissen von Wasserstoff zu Kohlenmonoxid kann mit Hilfe des Verfahrens der Dampfreformierung, partieller Oxidation, Methanol-Cracking oder anderen Herstellungsverfahren von Synthesegas durchgeführt werden. Essenziell ist die Übertragung von vorhandener Prozesswärme, die in klassischen Prozesstopographien nicht genutzt werden würden, mittels Wärmekopplung an einen beliebigen Brenngasstrom zu übertragen. Weiter denkbar ist die Anwärmung von Verbrennungsluft mit dem gleichen Ziel der Brenngaseinsparung und Kohlendioxidreduktion. Weiter könnte diese Prozesswärme auch aus dem gebildeten Rauchgas entnommen werden.

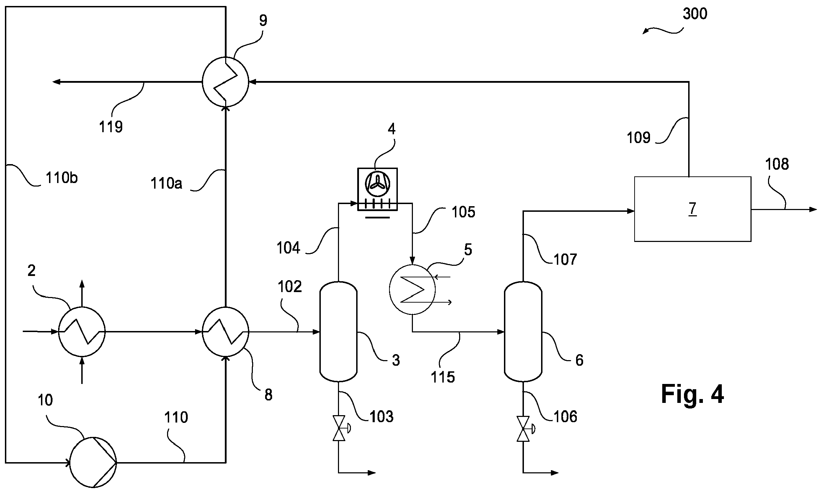

Die Wärmekopplung kann dabei wie zuvor beschrieben erfolgen, oder aber auch kann die Wärmeübertragung direkt im gasförmigen Synthesegasstrom durch Kondensation erfolgen (d.h. ohne Abtauchung). Die Position des Wärmeüberträgers entlang der Kühlkette ist dabei frei wählbar und das beschriebene Beispiel orientiert sich an der einer typischen Prozessaufstellung. Selbst ein separates Design außerhalb des Phasentrenners bzw. ersten Prozesskondensatabscheiders 3 ist möglich, wie es beispielhaft in Abbildung 4 anhand einer entsprechenden Anlage 300 dargestellt ist, wo eine entsprechende erste Wärmeübertragerstruktur 8 stromauf des ersten Prozesskondensatabscheiders 3 bereitgestellt ist.

Eine weitere Variante stellt die Vorwärmung des Restgases mit Hilfe von Kesselspeisewasser dar. Hierzu wird ein Kesselspeisewasseranwärmer derart modifiziert, dass das Kesselspeisewasser zuerst vom Synthesegas angewärmt wird und dann zum Restgasanwärmer strömt. Dort kühlt das Kesselspeisewasser ab und wärmt das Restgas vor. Das abgekühlte Kesselspeisewasser wird anschließend dem modifizierten Kesselspeisewasseranwärmer erneut zugeführt und abermals vom Synthesegas erwärmt, wobei das Synthesegas kondensiert und abkühlt.

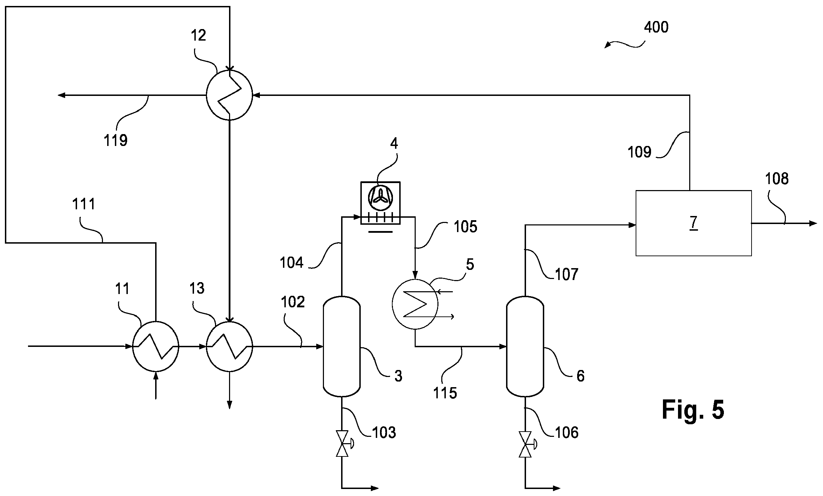

In der in Figur 5 veranschaulichten Anlage 400 ist dies der Fall. Hier wird die Wärmeübertragung unter Verwendung des Kesselspeisewassers, hier mit 111 bezeichnet, durchgeführt, das gegen zumindest einen Teil des Synthesegases in einer hier mit 11 bezeichneten ersten Wärmeübertragerstruktur erwärmt, danach in einer im Restgasstrom des Restgases 109 angeordneten zweiten Wärmeübertragerstruktur 12 abgekühlt, und schließlich gegen das Synthesegases in einer dritten Wärmeübertragerstruktur 13 wieder erwärmt wird.

Der modifizierte Kesselspeisewasseranwärmer bzw. hier die erste und dritte Wärmeübertragerstruktur 11, 13 kann dabei aus zwei oder mehreren getrennten Wärmeübertragern bestehen, oder aber auch über eine Seiten- bzw. Teilstromentnahme und -rückführung verfügen.

Ausgestaltungen der Erfindung können umfassen, das Wärmeüberträgermedium unterkritisch zu betreiben, und dabei zu verdampfen und auf der anzuwärmenden Seite wieder zu kondensieren. Ist das Wärmerüberträgermedium dampf- bzw. gasförmig, kann auf der kondensierenden Seite ein Turbinen- bzw. Generatorarrangement zur z.B. Stromerzeugung oder ein sekundärer Wärmekreislauf eingebunden werden (z.B. Organic Rankine Cycle). Auch andere Wärmeüberträgermedien sind denkbar, die dem notwendigen zu übertragenden Temperaturniveau entsprechen.

Ebenso ist es möglich (speziell in Anlagen, in denen zwar Überschussdampf produziert wird, dieser jedoch nicht exportiert wird), das Restgas mit Hilfe von Dampf (überhitzt, gesättigt oder überkritisch) vorzuwärmen.

## Patentansprüche

1. Verfahren zur Gewinnung eines oder mehrerer Verfahrensprodukte (108), bei dem ein Einsatzgemisch unter Erhalt eines zumindest Kohlenmonoxid, Wasserstoff und Wasser enthaltenden Synthesegases (101) einer endothermen Umsetzungsreaktion (1) unterworfen wird, wobei
- zumindest ein Teil des Wasser enthaltenden Synthesegases unter Erhalt eines ersten Zweiphasenstroms (102) einer Abkühlung (2) auf eine Temperatur in einem ersten Temperaturbereich unterworfen wird,
- zumindest ein Teil des ersten Zweiphasenstroms (102) in einem ersten Prozesskondensatabscheider (3) unter Erhalt einer ersten Gasphase (104) und einer ersten Flüssigphase (103) phasengetrennt wird,
- zumindest ein Teil der ersten Gasphase (104) unter Erhalt eines zweiten Zweiphasenstroms (105) einer weiteren Abkühlung (4, 5) auf eine Temperatur in einem zweiten Temperaturbereich unterworfen wird,
- zumindest ein Teil des zweiten Zweiphasenstroms (105) in einem zweiten Prozesskondensatabscheider (6) unter Erhalt einer zweiten Gasphase (107) und einer zweiten Flüssigphase (106) phasengetrennt wird, und
- zumindest ein Teil der zweiten Gasphase (107) unter Erhalt des oder der Verfahrensprodukte (108) und eines Restgases (109) auf einer Temperatur in dem zweiten Temperaturbereich einer Synthesegasaufbereitung (7) unterworfen wird,
**dadurch gekennzeichnet, dass**
- eine Wärmeübertragung von dem Synthesegas (102) oder einem Teil hiervon und/oder von dem ersten Zweiphasenstrom (102) oder einem Teil hiervon stromauf der weiteren Abkühlung (4, 5) auf das Restgas (109) oder einen Teil hiervon und/oder auf wenigstens einen weiteren Prozessgasstrom vorgenommen wird.

2. Verfahren nach Anspruch 1, bei dem die Wärmeübertragung unter Verwendung eines Wärmeüberträgermediums (110) durchgeführt wird.

3. Verfahren nach Anspruch 2, bei dem das Wärmeüberträgermedium (110) oder ein Teil hiervon in einem Wärmeüberträgerkreislauf nacheinander in einer oder mehreren ersten Wärmeübertragerstrukturen (8) erwärmt, in einer oder mehreren, in einem Restgasstrom oder Restgasteilstrom des Restgases (109) und/oder des wenigstens einen weiteren Prozessgasstroms angeordneten zweiten Wärmeübertragerstrukturen (9) abgekühlt, und mittels einer Pumpenanordnung der ersten Wärmeübertragerstruktur (8) erneut zugeführt wird.

4. Verfahren nach Anspruch 3, bei dem die erste Wärmeübertragerstruktur (8) stromauf des ersten Prozesskondensatabscheiders (3) und/oder in dem ersten Prozesskondensatabscheider (3) angeordnet ist, oder bei dem zumindest eine der mehreren ersten Wärmeübertragerstrukturen (8) stromauf des ersten Prozesskondensatabscheiders (3) und zumindest eine weitere der mehreren ersten Wärmeübertragerstrukturen (8) in dem ersten Prozesskondensatabscheider (3) angeordnet ist.

5. Verfahren nach einem der Ansprüche 3 oder 4, bei dem das Wärmeüberträgermedium (110) in dem gesamten Wärmeüberträgerkreislauf auf einem überkritischen Druck- und Temperaturniveau oder in dem gesamten Wärmeüberträgerkreislauf ohne Phasenwechsel auf einem unterkritischen Druckund Temperaturniveau geführt wird.

6. Verfahren nach einem der Ansprüche 3 oder 4, bei dem das Wärmeüberträgermedium (110) in einem Abschnitt des Wärmeüberträgerkreislaufs in kondensiertem Zustand und in einem weiteren Abschnitt des Wärmeüberträgerkreislaufs in verdampftem Zustand geführt wird.

7. Verfahren nach einem der Ansprüche 3 bis 6, bei dem in den Wärmeüberträgerkreislauf eine Turbinen-Generator-Anordnung eingebunden ist.

8. Verfahren nach einem der Ansprüche 3 bis 7, bei dem das Wärmeübertragungsmedium (110) aus Methanol, einem Thermoöl und einem Kohlenwasserstoff ausgewählt ist.

9. Verfahren nach Anspruch 1, bei dem die Wärmeübertragung unter Verwendung von Kesselspeisewasser (111) durchgeführt wird, das gegen zumindest einen Teil des Synthesegases in einer oder mehreren ersten Wärmeübertragerstrukturen (11) erwärmt, danach in einer oder mehreren, in einem Restgasstrom oder Restgasteilstrom des Restgases (109) und/oder des wenigstens einen weiteren Prozessgasstroms angeordneten zweiten Wärmeübertragerstrukturen (12) abgekühlt, und schließlich gegen zumindest einen Teil des Synthesegases in einer oder mehreren dritten Wärmeübertragerstrukturen (13) wieder erwärmt wird.

10. Verfahren nach einem der vorstehenden Ansprüche, bei dem die Synthesegasaufbereitung (7) Verfahrensschritte umfasst, die aus einer Kondensation von Kohlenwasserstoffen, einer Wassergasshift, einer reversen Wassergasshift, einem Druckwechseladsorptionsschritt und einem oder mehreren kryogenen Trennschritten oder Kombinationen hiervon ausgewählt sind.

11. Verfahren nach einem der vorstehenden Ansprüche, bei dem das Restgas (109) zu 15 bis 20% oder mehr Methan und Wasserstoff aufweist.

12. Verfahren nach einem der vorstehenden Ansprüche, bei dem das Restgas (109) zusätzlich unter Verwendung von Prozessdampf erwärmt wird.

13. Anlage (100, 200, 300, 400) zur Gewinnung eines oder mehrerer Verfahrensprodukte (108), wobei die Anlage (100, 200, 300, 400) dafür eingerichtet ist, ein Einsatzgemisch unter Erhalt eines zumindest Kohlenmonoxid, Wasserstoff und Wasser enthaltenden Synthesegases (101) einer endothermen Umsetzungsreaktion (1) zu unterwerfen, sowie
- zumindest einen Teil des Wasser enthaltenden Synthesegases unter Erhalt eines ersten Zweiphasenstroms (102) einer Abkühlung (2) auf eine Temperatur in einem ersten Temperaturbereich zu unterwerfen,
- zumindest einen Teil des ersten Zweiphasenstroms (102) in einem ersten Prozesskondensatabscheider (3) unter Erhalt einer ersten Gasphase (104) und einer ersten Flüssigphase (103) phasenzutrennen,
- zumindest einen Teil der ersten Gasphase (104) unter Erhalt eines zweiten Zweiphasenstroms (105) einer weiteren Abkühlung (4, 5) auf eine Temperatur in einem zweiten Temperaturbereich zu unterwerfen,
- zumindest einen Teil des zweiten Zweiphasenstroms (105) in einem zweiten Prozesskondensatabscheider (6) unter Erhalt einer zweiten Gasphase (107) und einer zweiten Flüssigphase (106) phasenzutrennen, und
- zumindest einen Teil der zweiten Gasphase (107) unter Erhalt des oder der Verfahrensprodukte (108) und eines Restgases (109) auf einer Temperatur in dem zweiten Temperaturbereich einer Synthesegasaufbereitung (7) zu unterwerfen,
**gekennzeichnet durch** Mittel, die dafür eingerichtet sind,
- eine Wärmeübertragung von dem Synthesegases (101) oder einem Teil hiervon und/oder von dem ersten Zweiphasenstrom (102) oder einem Teil hiervon stromauf der weiteren Abkühlung (4, 5) auf das Restgas (109) oder einen Teil hiervon und/oder auf wenigstens einen weiteren Prozessgasstrom vorzunehmen.

14. Anlage (100, 200, 300, 400) nach Anspruch 13, die zur Durchführung eines Verfahrens nach einem der Ansprüche 1 bis 12 eingerichtet ist.
